# EUROPÄISCHE PATENTSCHRIFT

(11) **EP 1 199 780 B1**
(45) Veröffentlichungstag und Bekanntmachung des Hinweises auf die Patenterteilung: **14.04.2004**
(21) Anmeldenummer: 00122556.4
(22) Anmeldetag: 16.10.2000
(51) Int. Cl.: H02G 1/12

(54) **Abisolierwerkzeug**
Stripping tool
Outil de dénudage

(43) Veröffentlichungstag der Anmeldung: 24.04.2002
(73) Patentinhaber: Weidmüller Interface GmbH & Co., D-32758 Detmold (DE)
(72) Erfinder: Schmode, Hartmut, 32825 Blomberg (DE)
(74) Vertreter: Urner, Peter, Dipl.-Phys.

(56) Entgegenhaltungen:
- DE-U- 29 906 890
- US-A- 3 226 815

## Beschreibung

Die Erfindung betrifft ein Abisolierwerkzeug, insbesondere ein Abisolierwerkzeug, das als Abisolierzange ausgebildet ist.

Zangen dieser Art sind bereits allgemein bekannt. Sie weisen üblicherweise einen ersten Handgriff und einen zweiten Handgriff auf, die zum Beispiel um eine gemeinsame Achse relativ zueinander verschwenkbar sind, und besitzen ferner einen ersten Arbeitsbacken und einen zweiten Arbeitsbacken, die bei Verschwenkung der Handgriffe entsprechend aufeinander zu oder voneinander weg bewegbar sind.

Ein Abisolierwerkzeug dieser Art gemäß dem Oberbegriff des Anspruchs 1 ist aus DE 29906890 U bekannt geworden.

Der Erfindung liegt die Aufgabe zugrunde, ein Abisolierwerkzeug der eingangs genannten Art zu schaffen, mit dem sich Kabel, insbesondere Flachbandkabel exakt bearbeiten lassen, und das darüber hinaus einen äußerst einfachen Aufbau aufweist und in der Herstellung billig ist.

Diese Aufgabe wird durch das Abisolierwerkzeug nach Anspruch 1 gelöst. Vorteilhafte Weiterbildungen und Ausgestaltung der Erfindung sind in den Unteransprüchen beschrieben.

Das erfindungsgemäße Abisolierwerkzeug zeichnet sich durch die Merkmale des Anspruchs 1 aus.

Durch die erfindungsgemäße Anordnung der Arbeitsbacken läßt es sich erreichen, daß sowohl beim stationären als auch beim mobilen Einsatz des Abisolierwerkzeugs ein Kabel, insbesondere ein Flachbandkabel sehr genau bearbeitet werden kann, da der erste Arbeitsbacken relativ zum zu bearbeitenden Kabel präzise ausgerichtet werden kann und dann seine Lage während der eigentlichen Bearbeitung, bei der der bewegliche zweite Arbeitsbacken auf den ersten zubewegt wird, relativ zum Träger nicht mehr verändert wird.

Es ist grundsätzlich denkbar, daß der zweite Arbeitsbacken in einer kombinierten Schwenk-Schiebebewegung auf den ersten Arbeitsbacken zu bewegt wird, um die Abisoliermesser und Arbeitselemente mit einem Kabel in Eingriff zubringen, vorzugsweise ist jedoch vorgesehen, daß der zweite Arbeitsbacken am Träger parallel verschiebbar geführt ist. Somit lassen sich Abisolierungsarbeiten an Kabeln und insbesondere an Flachbandkabeln auf besonders einfache und gleichzeitig präzise Weise durchführen.

Bei einer vorteilhaften Ausgestaltung der Erfindung ist vorgesehen, daß das Arbeitselement an jedem Arbeitsbacken als Abisoliermesser ausgebildet ist, so daß jeder der beiden Arbeitsbacken der Abisolierstation zwei parallel zueinander verlaufende und aneinander liegende Abisoliermesser trägt, deren Messerschneiden sich bei Belastung voneinander entfernen. Damit läßt sich automatisch schon beim Schneidvorgang der abgetrennte Teil einer Leiterisolation vom Leiter wenigstens zum Teil abschieben, was später die vollständige Abnahme des abgetrennten Teils vom Leiter erheblich erleichtert.

In einer alternativen Ausführungsform kann zur Bildung der Abisolierstation jeder Arbeitsbacken aber auch nur ein Abisoliermesser und einen parallel dazu liegenden Klemmbalken tragen, derart, daß sich die Klemmbalken der beiden Arbeitsbacken gegenüberliegen, wobei sich eine pro Arbeitsbacken vorhandene Messerschneide des Abisoliermessers und eine Klemmfläche des Klemmbalkens bei Belastung voneinander entfernen. Auch dadurch wird der Abziehvorgang eines abgetrennten Teils der Leiterisolation von einem Leiter unterstützt.-Vorteilhaft bei dieser Ausgestaltung ist darüber hinaus, daß nicht mehr zwei Schneidmesser pro Arbeitsbacken exakt nebeneinander ausgerichtet zu sein brauchen, um Doppelschnitte zu vermeiden.

Bei einer anderen Ausgestaltung der Erfindung ist vorgesehen, daß der bewegliche Arbeitsbacken mittels eines Antriebselements verschiebbar ist, das am Träger gelagert ist, wobei der bewegliche Arbeitsbacken vorzugsweise über ein Kniehebelgetriebe vom Antriebselement verschiebbar ist.

Obwohl es grundsätzlich denkbar ist, den Träger als stationären Ständer eines Bearbeitungsgeräts auszubilden, während das Antriebselement ein Betätigungshebel oder ein Motorantrieb sein kann, ist es für den mobilen Einsatz des erfindungsgemäßen Abisolierwerkzeugs besonders zweckmäßig, wenn zur Bildung einer Abisolierzange der Träger mit einem ersten Handgriff versehen und das Antriebselement als zweiter Handgriff ausgebildet ist.

Die Abisoliermesser bzw. Klemmbacken sind vorzugsweise um jeweils eine parallel zu ihnen verlaufende Kippachse drehbar gelagert oder, alternativ, jeweils in einem Halteblock herausnehmbar gehalten, wobei die Halteblöcke jeweils um eine parallel zum Abisoliermesser bzw. Klemmbalken verlaufende Kippachse drehbar gelagert sind. Dadurch lassen sich auf einfache Weise die pro Arbeitsbacken vorhandenen Elemente wie Abiso-Iiermesser und Klemmbalken voneinander entfernen.

Um dies zu erreichen, bedarf es keiner zusätzlichen Antriebseinrichtung. Das Spreizen der Abisoliermesser bzw. eines aus einem Abisoliermesser und einem Klemmbalken bestehenden Paares erfolgt vielmehr unmittelbar bei Belastung dieser Elemente während des Schneidvorgangs. Zu diesem Zweck besteht zwischen den pro Arbeitsbacken vorhandenen Elementen Abisoliermesser, Klemmbalken oder Halteblöcke einerseits und den zugehörigen Kippachsen andererseits eine Überkreuz-Zuordnung. Das bedeutet, daß pro Arbeitsbacken zum Beispiel die Kippachse für einen der Halteblöcke an der diesem Halteblock abgewandten Außenseite des anderen Halteblocks liegt, und umgekehrt. Werden also die in den Halteblöcken befestigten Abisoliermesser bzw. Klemmbalken beim Abisoliervorgang beaufschlagt, drehen sich die jeweiligen Halteblöcke um ihre Kippachsen voneinander weg.

Dabei sind die Kippachsen an einander gegenüberliegenden Bereichen der Arbeitsbacken gelagert.

Nach Durchführung eines Schneidvorgangs müssen die Abisoliermesser, Klemmbalken bzw. Halteblöcke, auf die jetzt seitens des bearbeiteten strangförmigen Guts keine Kräfte mehr einwirken, wieder zurück in ihre Ausgangsposition gebracht werden. Hierzu können Federn verwendet werden, die die jeweiligen Elemente wieder in ihre Ausgangsposition drücken. Um diese Ausgangsposition für die genannten Elemente zu definieren, kann zwischen diesen ein Positionierungsstift eingreifen, der fest am jeweiligen Arbeitsbacken montiert ist. Durch die Federn werden dann die jeweiligen Elemente zurück gegen den Positionierungsstift gedrückt, nachdem ein Abisoliervorgang erfolgt ist, so daß sich die genannten Elemente dann automatisch wieder in ihrer Ausgangsposition befinden.

Um Abisolierwerkzeuge der genannten Art billiger herstellen zu können, wird vorgeschlagen, daß die Arbeitsbacken eine identische Form bzw. Geometrie aufweisen. Formteile oder Arbeitsprogramme zur Herstellung der jeweiligen Handgriffe bzw. Arbeitsbacken lassen sich somit für beide der jeweiligen Elemente verwenden, was besonders vorteilhaft ist und die Produktionskosten weiter verringert.

In Fortführung dieses Prinzips ließen sich zum Beispiel auch die für die jeweiligen Arbeitsbacken vorgesehenen Haltereinrichtungen zum Halten von Bearbeitungselementen, also Abisoliermesser oder Klemmbalken, oder dergleichen in ihrer Form bzw. Geometrie identisch ausbilden. Die Abisolierstation im Zangenmaul kann dabei zum Beispiel aus vier identisch aufgebauten Baugruppen bestehen, mit denen die Bearbeitungselemente verbindbar sind.

Ein Ausführungsbeispiel der Erfindung wird nachfolgend unter Bezugnahme auf die Zeichnung im einzelnen erläutert. Es zeigen:
Figur 1 eine perspektivische Ansicht einer Zange mit einer Abisolierstation in geöffnetem Zustand;
Figur 2 die Zange nach Figur 1 bei abgenommenem oberen Arbeitsbacken;
Figur 3 eine perspektivische Zange nach Figur 1 in geschlossenem Zustand;
Figur 4 die Zange nach Figur 3 bei abgenommenem oberen Arbeitsbacken;
Figur 5 ein Flachbandkabel in der zur Zange gehörenden Abisolierstation, wobei die Zange selbst der Übersicht wegen fortgelassen ist;
Figur 6 eine Draufsicht auf ein als Zange ausgebildetes erfindungsgemäßes Abisolierwerkzeug; und
Figur 7 eine Draufsicht auf das Abisolierwerkzeug nach Figur 6 in geschlossenem Zustand.

In den verschiedenen Figuren der Zeichnung sind einander entsprechende Bauteile mit gleichen Bezugszeichen versehen.

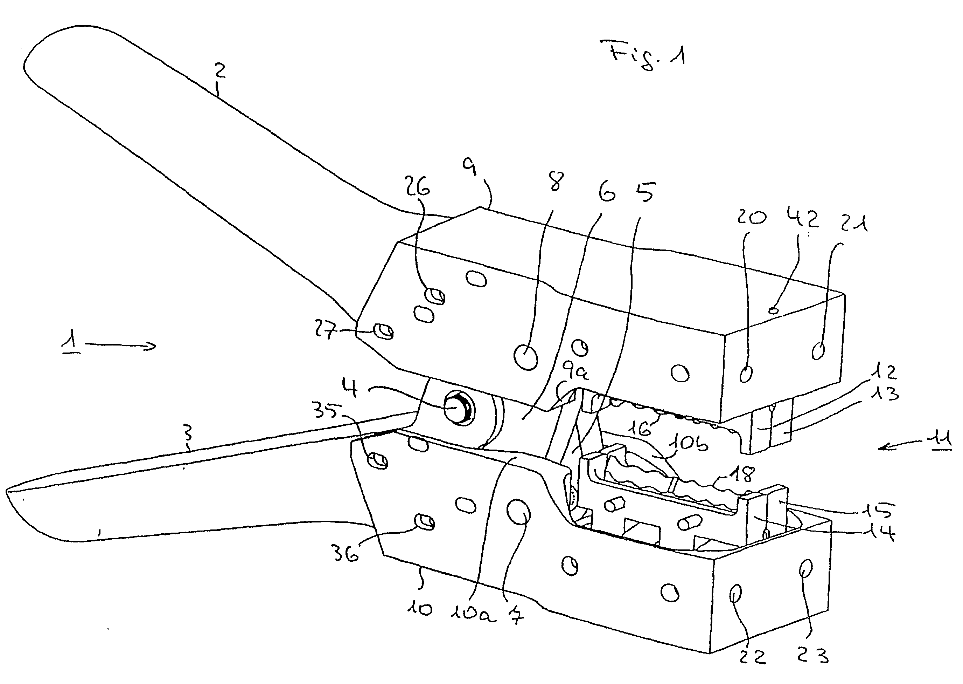

Anhand der Figuren 1 bis 5 wird zunächst das Funktionsprinzip der Abisolierstation des erfindungsgemäßen Abisolierwekzeugs näher erläutert werden.

Wie in Figur 1 gezeigt ist, weist die Zange 1 einen ersten Handgriff 2 und einen zweiten Handgriff 3 auf. Beide Handgriffe 2 und 3 sind in ihrem vorderen Bereich um eine gemeinsame Achse 4 relativ zueinander verschwenkbar. In ihrem die gemeinsame Achse 4 zum vorderen Zangenende hin überragenden Bereich weisen die Handgriffe 2 und 3 jeweils einen Lagerabschnitt 5, 6 auf, der zum jeweils anderen der Handgriffe weist. Mit anderen Worten erstreckt sich der Lagerabschnitt 5 des ersten Handgriffs 2 ein wenig in Richtung zum zweiten Handgriff 3, während sich der Lagerabschnitt 6 des zweiten Handgriffs 3 ein wenig in Richtung zum ersten Handgriff 2 erstreckt. Im Bereich dieser Lagerabschnitte 5 und 6 tragen die Handgriffe 2 und 3 jeweils eine Lagerachse 7. 8. Diese steht senkrecht zur Zangenebene, die durch die Handgriffe 2 und 3 aufgespannt ist.

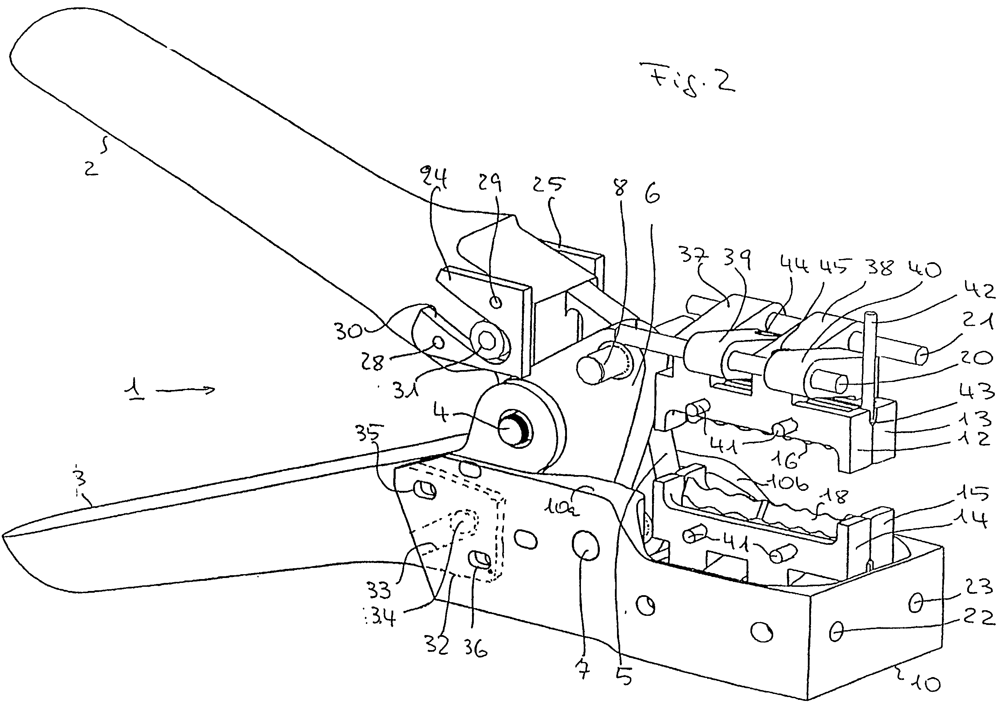

Auf den Lagerachsen 7, 8 ist jeweils ein Arbeitsbacken schwenkbar gelagert. So ist ein erster Arbeitsbacken 9 auf der Lagerachse 8 gelagert, während ein zweiter Arbeitsbacken 10 auf der Lagerachse 7 gelagert ist. Beide Arbeitsbacken 9, 10 sind halbschalenförmig ausgebildet und nehmen beide Lagerabschnitte 5, 6 zwischen zu ihnen gehörenden Seitenwänden 9a bzw. 10a, 10b auf. Diese Seitenwände 9a bzw. 10a, 10b erstrecken sich weiter in Richtung zum hinteren Zangenende und umgreifen dort die oberhalb und unterhalb der gemeinsamen Lagerachse 4 liegenden Bereiche von erstem und zweitem Handgriff 2 bzw. 3. Während also der erste Arbeitsbacken 9 über die Lagerachse 8 am zweiten Handgriff 3 schwenkbar gelagert ist, ist er weiterhin in seinem hinteren Bereich am ersten Handgriff 2 gleitend verschiebbar gelagert, wie später noch unter Bezugnahme auf Figur 2 erläutert wird. Dagegen ist der zweite Arbeitsbacken 10 über die Lagerachse 7 am ersten Handgriff 2 schwenkbar gelagert, während er in seinem zum hinteren Zangenende weisenden Bereich am zweiten Handgriff 3 gleitend verschiebbar gelagert ist, wie ebenfalls noch ausgeführt wird. Werden die Handgriffe 2 und 3 verschwenkt, so werden also einerseits die Arbeitsbacken 9 und 10 entsprechend aufeinander zu oder voneinander weg bewegt, während andererseits bei jeder Verschwenkstellung der Handgriffe 2 und 3 die Arbeitsbacken 9 und 10 parallel zueinander zu liegen kommen. Eine Verdrehung bzw. Verkippung der Arbeitsbacken 9 und 10 relativ zueinander findet nicht statt.

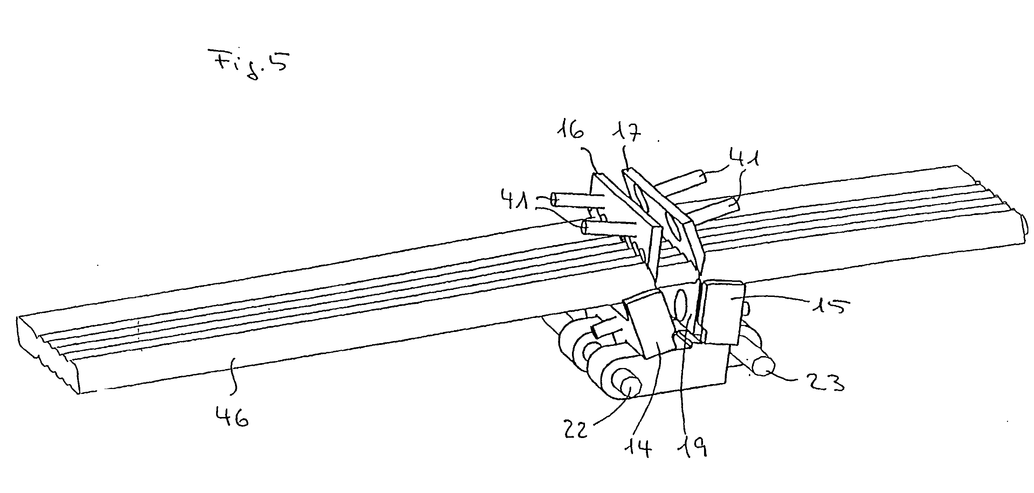

Im Bereich des am vorderen Ende der Zange 1 liegenden Zangenmauls befindet sich im vorliegenden Ausführungsbeispiel zwischen den Arbeitsbacken 9 und 10 eine Abisolierstation 11. Zu dieser Abisolierstation gehören vier Halteblöcke 12, 13, 14 und 15, von denen jeweils zwei an einem der Arbeitsbacken 9, 10 drehbar gelagert sind. Die am jeweiligen Arbeitsbacken 9, 10 drehbar gelagerten Halteblöcke 12, 13 bzw. 14, 15 sind länglich ausgeführt und erstrecken sich in Zangenlängsrichtung. Jeder der Halteblöcke 12 bis 15 nimmt ein Abisoliermesser 16, 17 bzw. 18, 19 auf, die parallel zueinander liegen und sich ebenfalls in Zangenlängsrichtung erstrecken. Die Abisoliermesser 17-und 19 sind in Figur 5 zu erkennen. Dabei liegen die Abisoliermesser 16 und 17 bzw. 18 und 19 in Ausgangsstellung der Zange 1 bei geöffnetem Zangenmaul eng aneinander, während sich die zu verschiedenen Arbeitsbacken 9 und 10 gehörenden Abisoliermesser 16, 18 bzw. 17, 19 gegenüberstehen. Sie sind entsprechend der Leiterstruktur eines abzuisolierenden Flachkabels in ihrem Schneidbereich profiliert.

Parallel zu den Halteblöcken 12, 13 im ersten Arbeitsbacken 9 sowie parallel zu den Halteblöcken 14, 15 im zweiten Arbeitsbacken 10 liegen im Innern der Arbeitsbacken Kippachsen 20, 21 bzw. 22, 23, um die die jeweiligen Halteblöcke 12, 13, 14 und 15 kippbar bzw. verschwenkbar sind. Im einzelnen ist dabei in Figur 1 der Halteblock 12 um die Kippachse 21 im Uhrzeigersinn verschwenkbar, während der Halteblock 13 um die Kippachse 20 entgegen dem Uhrzeigersinn verschwenkbar ist. Der Halteblock 14 ist um die Kippachse 23 entgegen dem Uhrzeigersinn verschwenkbar, während der Halteblock 15 um die Kippachse 22 im Uhrzeigersinn verschwenkbar ist. Die Kippachsen 20 bis 23 sind jeweils an einer vorderen Stirnfläche der Arbeitsbacken 9 und 10 befestigt sowie in deren mittleren Bereich, was nicht genauer dargestellt ist.

Die Figur 2 zeigt die erfindungsgemäße Zange bei abgenommenem ersten Arbeitsbacken 9.

Zu erkennen ist, daß sich am ersten Handgriff 2 in einem Bereich, der zum hinteren Zangenende hin kurz hinter dem Lagerabschnitt 6 bzw. der Lagerachse 8 des zweiten Handgriffs 3 zu liegen kommt, an jeweils gegenüberliegenden Seiten jeweils eine Führungsplatte befindet, die mit den Bezugszeichen 24 und 25 versehen sind. Diese Führungsplatten 24 und 25 liegen parallel zur Zangenebene und sind an den gegenüberliegenden Innenseiten des hier nicht dargestellten Arbeitsbackens 9 befestigt. Die Befestigung kann zum Beispiel dadurch erfolgen, daß durch die Öffnungen 26, 27 in Figur 1 Schrauben durch die Seitenwände 9a, 9b hindurchgeführt und in Gewindebohrungen 28, 29 eingeschraubt werden, die sich in den Führungsplatten 24, 25 befinden.

Jede der Führungsplatten 24, 25 weist darüber hinaus eine Führungsnut 30 auf, in die eine Führungsachse 31 eingreift, die senkrecht zur Zangenebene steht und am ersten Handgriff 2 befestigt ist bzw. diesen durchsetzt. Die Führungsnut 30 verläuft dabei in Figur 2 nach hinten und schräg nach oben und erlaubt dem Arbeitsbacken 9, sich beim Schließen der Handgriffe 2, 3 infolge der Bewegung der Lagerachse 8 nach vorn ebenfalls nach vorn zu bewegen. Da gleichzeitig die Lagerachse 8 auch nach unten bewegt wird, wird infolge der Schrägstellung der Nut 30 auch der hintere Teil des Arbeitsbackens 9 nach unten geführt, so daß er ständig parallel zum zweiten Arbeitsbacken 10 verbleibt, bei dem dieses Führungsprinzip ebenfalls angewandt wird. Zu diesem Zweck wird auf die gestrichelte Darstellung einer entsprechenden Führungsplatte 32 mit Führungsnut 33 verwiesen, die sich zum hinteren Zangenende hin nach links unten in Figur 2 öffnet. In diese Führungsnut greift eine Führungsachse 34 ein, die am zweiten Handgriff 3 befestigt ist bzw. diesen durchsetzt. Die Befestigung der Führungsplatte 32 an der Innenseite der Seitenwand 10a erfolgt in der gleichen Weise wie die Befestigung der Führungsplatte 24. Hierzu sind Durchgangsöffnungen 35 und 36 im Arbeitsbacken 10 vorgesehen. Eine entsprechende und hier nicht zu erkennende Führungsplatte befindet sich an der gegenüberliegenden Innenseite der Seitenwand 10b des zweiten Arbeitsbackens 10.

Die Figur 2 läßt außerdem den Aufbau des oberen Teils der Abisolierstation 11 im einzelnen erkennen.

Zu sehen sind die beiden Halteblöcke 12,13 und die ihnen jeweils zugeordneten Kippachsen 20, 21. Der Halteblock 12 ist um die Kippachse 21 schwenkbar, wozu er zwei im Abstand voneinander liegende Bügel 37, 38 aufweist, die seitlich über ihn hinausstehen und die Kippachse 21 umgreifen. Die Bügel 37, 38 sind an der oberen Kante einstückig mit dem Halteblock 12 verbunden und so abgewinkelt, daß sie über den zweiten Halteblock 13 hinweglaufen. Die Kippachse 21 liegt an der dem Halteblock 12 abgewandten Seite des Halteblocks 13. Für den Halteblock 13 gilt hinsichtlich der Kippachse 20 entsprechendes. Auch der Halteblock 13 weist zwei an seiner oberen Seite mit ihm verbundene Bügel 39 und 40 auf, die im vorliegenden Fall nach links abgewinkelt sind und die Kippachse 20 umgreifen. Dabei laufen die Bügel 39 und 40 über den Halteblock 12 hinweg. Die Kippachse 20 liegt an der dem Halteblock 13 abgewandten Seite des Halteblocks 12.

Für den unteren Aufbau der Abisolierstation, also für die Halteblöcke 14 und 15 und die zugeordneten Kippachsen 23 und 22 gilt entsprechendes. Sowohl die obere Baugruppe als auch die untere Baugruppe der Abisolierstation 11 können identisch ausgebildet sein, was Form bzw. Geometrie angeht. Hiervon können lediglich die von den Halteblöcken getragenen Elemente eine Ausnahme machen, also im vorliegenden Fall die Abisoliermesser 16 bis 19. Sie sind mit Hilfe von Stiften oder Schrauben, die die Halteblöcke durchsetzen, an diesen befestigt. Die Stifte bzw. Schrauben tragen hier das gemeinsame Bezugszeichen 41.

Befindet sich die Zange in der in Figur 2 gezeigten Stellung, ist also das Zangenmaul offen, so liegen auch die oberen Halteblöcke 12, 13 im Abstand zu den unteren Haltblöcken 14, 15. Dagegen liegen die Haltblöcke 12, 13 eng aneinander an und auch die Halteblöcke 14 und 15, was bedeutet, daß die Abisoliermesser 16 und 17 eng aneinander anliegen sowie auch die Abisoliermesser 18 und 19, um jeweils eine gemeinsame Schneidkante zu bilden. Damit die Halteblöcke 12, 13 einerseits und die Halteblöcke 14, 15 andererseits eng aneinander anliegen können bzw. gegeneinander gedrückt werden, befinden sich in den Bügeln 38 und 39 Sacklöcher 45, 44 zur Aufnahme von Druckfedern, die hier nicht gezeigt sind. Diese Druckfedern stützen sich an der oberen Innenfläche des ersten Arbeitsbackens 9 ab und drücken den Halteblock 12 entgegen dem Uhrzeigersinn um die Kippachse 21 sowie den Halteblock 13 im Uhrzeigersinn um die Kippachse 20, so daß sie gegeneinander schlagen. Damit dieAbisoliermesser in der Zangenebene zu liegen kommen, wird die Stellung der Halteblöcke 12, 13 arretiert, und zwar durch einen Zentrierstift 42, der ebenfalls an der oberen Fläche des ersten Arbeitsbackens 9 befestigt ist und ins Innere dieses Arbeitsbackens ragt bis hinein in einen Bereich, der zwischen den Halteblöcken 12, 13 liegt. Zur Aufnahme des Zentrierstifts 42 weisen daher die Halteblöcke 12, 13 an ihren gegenüberliegenden Seiten eine entsprechende Ausnehmung auf. Sie trägt das Bezugszeichen 43. Der Zentrierstift 42 dient mit anderen Worten als Anschlag für die Halteblöcke 12, 13.

Ein identischer Aufbau ist vorgesehen, um die Halteblöcke 14, 15 im zweiten Arbeitsbacken 10 zu zentrieren. Auch hier werden die Halteblöcke 14, 15 mit Hilfe von nicht dargestellten Federn entsprechend der zuvor beschriebenen Weise gegeneinander gedrückt.

Nach einer Ausgestaltung der Erfindung kann vorgesehen sein, die jeweiligen Abisoliermesser 16 bis 19 auch um eine Achse justierbar einstellen bzw. verdrehen zu können, die senkrecht zur Zangenebene liegt. Dadurch könnte eine Fehlparallelisierung der Arbeitsbacken infolge von Werkstoffelastizitäten beim Betrieb der Zange ausgeglichen werden.

Es sei noch erwähnt, daß nicht unbedingt jeder der Halteblöcke ein Abisoliermesser aufnehmen muß. Beispielsweise wäre es möglich, nur die Halteblöcke 12 und 14 mit Abisoliermessern auszustatten, während in den Halteblöcken 13 und 15 Klemmbalken (nicht dargestellt) positioniert werden, die lediglich zum Halten bzw. Festklemmen eines Leiters im Zangenmaul dienen. Das Durchschneiden einer Leiterisolation würde dann von den Abisoliermessern 16 und 18 übernommen werden.

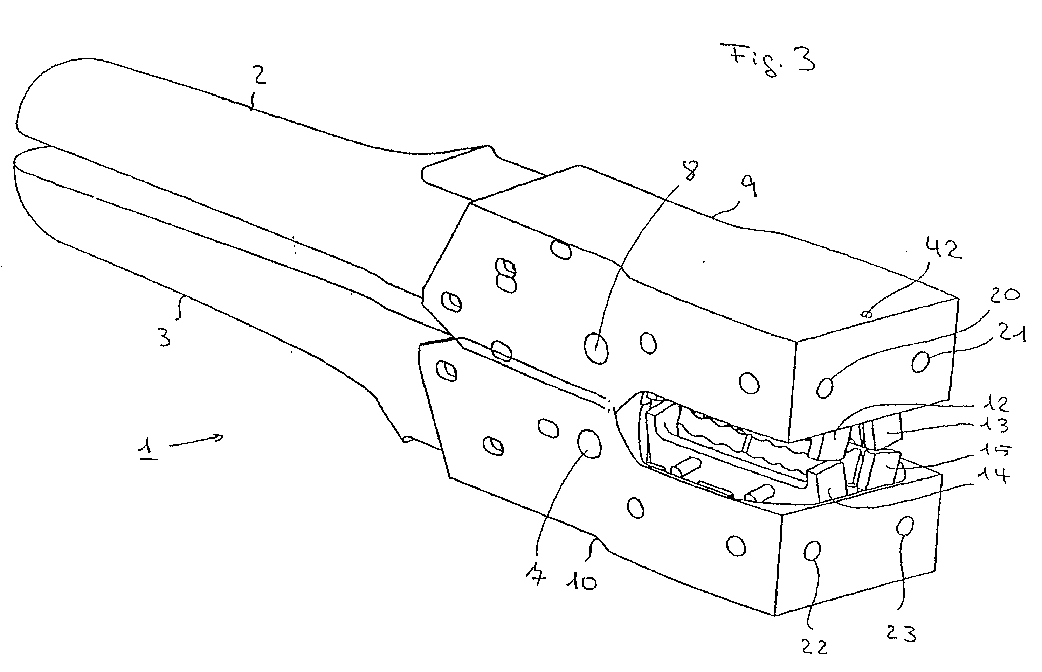

Die Figur 3 zeigt die erfindungsgemäße Zange 1 in geschlossener Stellung. Hier sind die Handgriffe 2 und 3 zusammengedrückt und die Arbeitsbacken 9 und 10 so weit parallel aufeinander zu verschoben, daß die Halteblöcke 12, 13. 14 und 15 aus ihrer Ruhelage herausgeschwenkt sind. Dabei sind die Halteblöcke 12, 14 einerseits und 13, 15 andererseits jeweils mit ihren aufeinanderzuweisenden Endkanten gegeneinander gelaufen und haben sich infolgedessen verkippt.

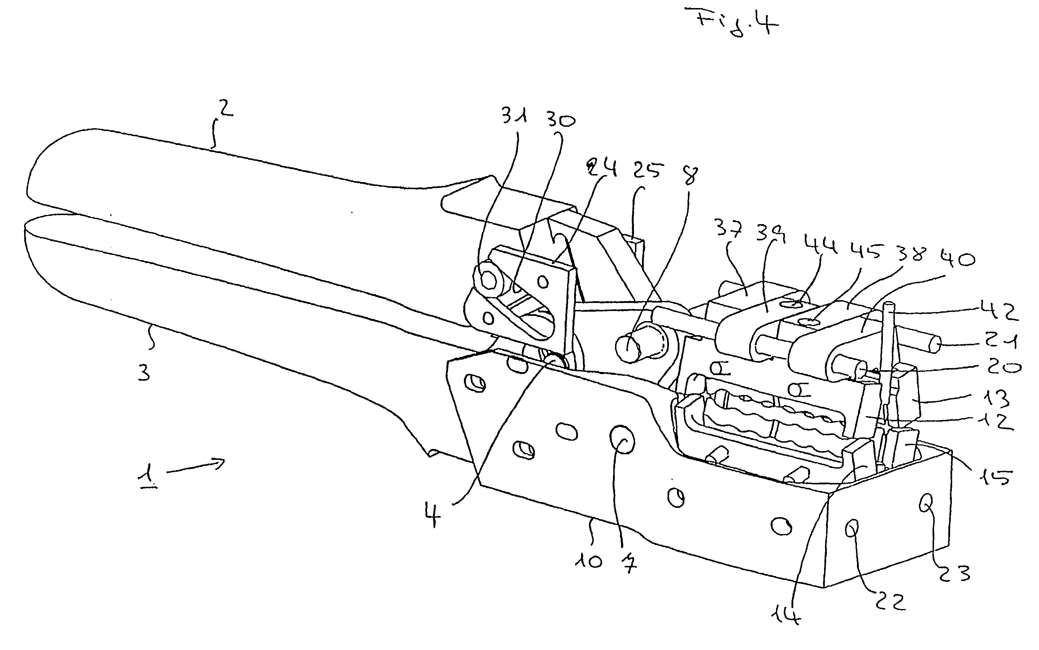

Die Figur 4 zeigt die Zange 1 in geschlossenem Zustand bei abgenommenem ersten Arbeitsbacken 9.

In diesem geschlossenen Zangenzustand sind die Arbeitsbacken 9, 10 am weitesten zum vorderen Zangenende hin verschoben, da die Lagerachsen 7, 8 ihre am weitesten vorn liegende Position einnehmen, und zwar bezogen auf die gemeinsame Drehachse 4. Auch die Führungsplatten 24, 25 bzw. 32 liegen am weitesten vorn, so daß die Führungsachse 31 am hinteren Ende der Nut 30 zu liegen kommt.

Infolge des Gegeneinanderlaufens der Halteblöcke 12 und 14 bzw. 13 und 15 sind diese um ihre jeweiligen Kippachsen verdreht worden, und zwar der Halteblock 12 im Uhrzeigersinn um die Achse 21, der Halteblock 13 entgegen dem Uhrzeigersinn um die Kippachse 20, der Halteblock 14 entgegen dem Uhrzeigersinn um die Kippachse 23 und der Halteblock 15 im Uhrzeigersinn um die Kippachse 22. Durch das Verkippen der Haltblöcke in diese Stellung werden die bereits erwähnten Druckfedern vorgespannt bzw. komprimiert, die sich in den Ausnehmungen 44 und 45 an der oberen Seite der Bügel 37. 38 befinden und sich an der inneren Fläche der oberen Wand des ersten Arbeitsbackens 9 abstützen. Entsprechendes gilt für die jeweiligen Druckfedern im unteren Arbeitsbacken 10.

Werden die Handgriffe 2 und 3 wieder entlastet, bewegt sich die Lagerachse 8 entgegen dem Uhrzeigersinn um die gemeinsame Achse 4, während sich die Lagerachse 7 im Uhrzeigersinn um die gemeinsame Achse 4 dreht. Die Arbeitsbacken 9, 10 werden dadurch wieder zum Zangenende hin verschoben und voneinander getrennt, und zwar infolge der Bewegung der Lagerachsen 7, 8 sowie infolge der Führung der Führungsachse 31 in der Führungsnut 30 sowie der Führung der Führungsachse 34 in der Führungsnut 33.

Da die Halteblöcke wieder außer Kontakt miteinander kommen, werden sie jetzt über die in den Öffnungen 44 und 45 befindlichen Druckfedern wieder in ihre Ausgangsstellung gedreht, bis sie gegen den Zentrierstift 42 im Arbeitsbacken 9 bzw. einen entsprechenden Zentrierstift im Arbeitsbacken 10 schlagen.

Die Figur 5 zeigt ein innerhalb der Abisolierstation 11 liegendes Flachkabel 46, wobei die restlichen Teile der Zange der Übersicht wegen fortgelassen sind. Das Zangenmaul ist hier geschlossen und es sind die Abisoliermesser 16, 17 bzw. 18, 19 um ihre jeweiligen Achsen 20, 21, 22 und 23 gekippt. Durch diesen Kippvorgang kann ein durchtrenntes Isolationsende nicht nur abgeschoben werden, sondern es können auch noch nicht vollständig durchtrennte kleinere Bereiche der Leiterisolation zerrissen werden.

Es sei darauf hingewiesen, daß sowohl die beiden Arbeitsbacken 9. 10 als auch die Abisolierstation 11 mit Ausnahme ggf. der Abisoliermesser vollständig identisch in Form bzw. Geometrie aufgebaut sein können. Das erfindungsgemäße Abisolierwerkzeug ist daher besonders einfach und kostengünstig herstellbar.

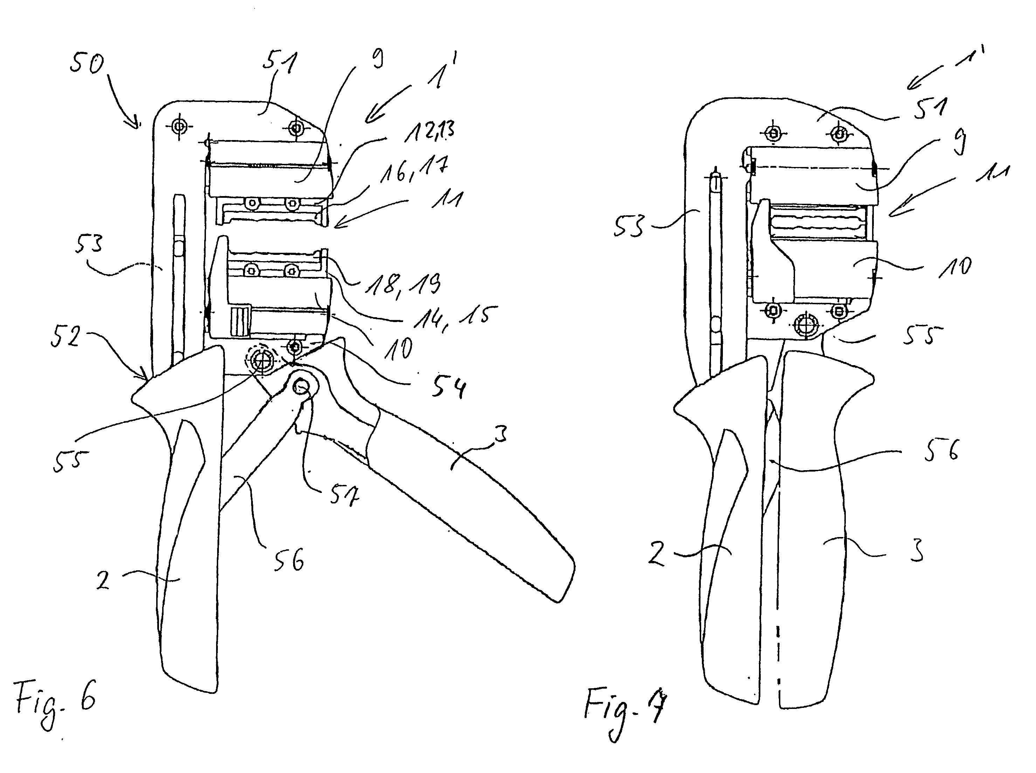

Anhand der Figuren 6 und 7 wird das erfindungsgemäße Abisolierwerkzeug am Beispiel einer Abisolierzange l' näher erläutert. Die Arbeitsweise der Abisolierstation 11, also das Zusammenwirken der Abisoliermesser 16, 17, 18, 19 sowie der an den Arbeitsbacken 9, 10 um Kippachsen schwenkbaren Halteblöcke 12, 13, 14, 15 ist dieselbe wie bei der anhand der Figuren 1 bis 5 beschriebenen Abisolierstation 11.

Wie Figur 6 zeigt, weist die erfindungsgemäße Abisolierzange einen im wesentlichen L-förmigen Träger 50 auf, dessen kurzer Schenkel einen Lagerblock 11 bildet, an dem der erste Arbeitsbacken 9 fest angebracht ist. Ein dem Lagerblock 51 benachbart liegender Abschnitt des langen Schenkels 52 des L-förmigen Trägers 50 ist als Linearführungsabschnitt 53 für einen zweiten, beweglichen Lagerblock 54 ausgebildet, während ein freier Endabschnitt des langen Schenkels 53 einen Handgriff 2 bildet.

Der bewegliche Lagerblock 54, an dem der zweite Arbeitsbacken 10 mit Arbeitselementen der Abisolierstation 11 angebracht ist, läßt sich mit Hilfe eines als Antriebselement dienenden zweiten Handgriffs 3 so verschieben, daß sich der zweite Arbeitsbacken 10 parallel auf den ersten

Arbeitsbacken 9 zubewegt. Der Handgriff 3 ist dabei über ein Schwenk-Drucklager 55 am verschiebbaren Lagerblock 54 angelenkt. Ein Stützhebel 56, der mit seinem einen Ende unter Bildung eines Kniegelenks 57 am Handgriff 3 angelenkt ist, ist mit seinem anderen Ende in nicht näher dargestellter Weise im Handgriffbereich am Träger 50 schwenkbar abgestützt. Der Handgriff 3 bildet somit einen Doppelhebel, dessen freier Abschnitt das eigentliche Antriebselement darstellt, das über den zwischen dem Lagerblock 54 und dem Handgriff 2 angeordneten Kniehebel den Lagerblock 54 in Richtung auf den festen Lagerblock 51 bewegt.

Wird der Handgriff 3 aus seiner in Figur 6 dargestellten Stellung zum Handgriff 2 hin geschwenkt, so wird der Kniehebel in Richtung seiner Streckstellung bewegt, so daß der Lagerblock 54, der im Linearführungsabschnitt 53 des Trägers 50 verschiebbar geführt ist, parallel auf den Lagerblock 51 zu bewegt wird. Durch diese Bewegung nähern sich die beiden Arbeitsbacken 9 und 10 parallel geführt einander an, so daß die Halteblöcke 16, 18 bzw. 17, 19 der Abisoliermesser verkippen, sobald die Halteblöcke 12, 14 bzw. 13, 15 mit ihren Endkanten gegeneinander laufen. Durch das Verkippen der Halteblöcke entfernen sich die Schneiden der Abisoliermesser voneinander.

Befindet sich ein Kabel, insbesondere ein Flachkabel in der Abisolierstation 11, so wird nach dem Durchtrennen der Isoleirung des Kabels das zu entfernende Teil der Isolierung durch die sich voneinander weg bewegenden Messerschneiden bereits teilweise abgeschoben, was die spätere Abnahme des zu entfernenden Teils der Isolierung wesentlich erleichtert.

## Patentansprüche

1. Abisolierwerkzeug mit einem ersten Arbeitsbacken (9) und einem zweiten Arbeitsbacken (10) einer Abisolierstation (11) versehen der zweite Arbeitsbacken (10) auf den ersten Arbeitsbacken (9) zu und von diesem weg bewegbar ist, wobei zur Bildung der Abisolierstation (11) jeder Arbeitsbacken (9, 10) zumindest ein Abisoliermesser (16, 18) und ein parallel dazu liegendes Arbeitselement (17, 19) trägt, derart, daß sich die Arbeitselemente (17, 19) und die Abisoliermesser (16, 18) der beiden Arbeitsbacken (9, 10) jeweils gegenüberliegen und daß sich bei Belastung an jedem der beiden Arbeitsbacken (9, 10) das Abisoliermesser (16; 18) und Arbeitselement (17, 19) voneinander entfernen,
**dadurch gekennzeichnet,**
**daß** der erste Arbeitsbacken (9) der Abisolierstation (11) fest an einem Träger (51) und der zweite Arbeitsbacken (10) beweglich an dem gleichen Träger (51) angebracht sind.

2. Abisolierwerkzeug nach Anspruch 1, **dadurch gekennzeichnet, daß** der zweite Arbeitsbacken (10) am Träger (50) parallel verschiebbar geführt ist.

3. Abisolierwerkzeug nach Anspruch 1 oder 2, **dadurch gekennzeichnet, daß** das Arbeitselement an jedem Arbeitsbacken (9, 10) als Abisoliermesser (17, 19) ausgebildet ist, so daß jeder der beiden Arbeitsbacken (9, 10) der Abisolierstation (11) zwei parallel zueinander verlaufende und aneinander liegende Abisoliermesser (16, 17; 18, 19) trägt, deren Messerschneiden sich bei Belastung voneinander entfernen.

4. Abisolierwerkzeug nach Anspruch 1 oder 2, **dadurch gekennzeichnet, daß** das Arbeitselement an jedem Arbeitsbacken (9, 10) als Klemmbalken ausgebildet ist, so daß jeder der beiden Arbeitsbacken (9, 10) der Abisolierstation (11) ein Abisoliermesser (16; 18) und einen parallel dazu liegenden Klemmbalken trägt, wobei sich jeweils eine Messerschneide des Abisoliermessers (16; 18) und eine Klemmfläche des Klemmbalkens bei Belastung voneinander entfernen.

5. Abisolierwerkzeug nach einem der vorstehenden Ansprüche, **dadurch gekennzeichnet, daß** der bewegliche Arbeitsbacken (10) mittels eines Antriebselements (2) verschiebbar ist, das am Träger (50) gelagert ist.

6. Abisolierwerkzeug nach Anspruch 5, **dadurch gekennzeichnet, daß** der bewegliche Arbeitsbacken (10) über ein Kniehebelgetriebe (#) vom Antriebselement (2) verschiebbar ist.

7. Abisolierwerkzeug nach Anspruch 4 oder 5, **dadurch gekennzeichnet, daß** zur Bildung einer Abisolierzange (1') der Träger (50) mit einem ersten Handgriff (2) versehen und das Antriebselement als zweiter Handgriff (3) ausgebildet ist.

8. Abisolierwerkzeug nach einem der vorstehenden Ansprüche, **dadurch gekennzeichnet, daß** die Abisoliermesser (16, 17; 18, 19) bzw. Klemmbalken oder Arbeitselemente um jeweils eine parallel zu ihnen verlaufende Kippachse (21, 20; 23, 22) drehbar gelagert sind.

9. Abisolierwerkzeug nach Anspruch 8, **dadurch gekennzeichnet, daß** die Abisoliermesser bzw. Klemmbalken oder Arbeitselemente jeweils in einem Halteblock (12 - 15) herausnehmbar gehalten sind, und daß die Halteblöcke (12 - 15) um die Kippachsen (20 - 23) drehbar gelagert sind.

10. Abisolierwerkzeug nach Anspruch 8 oder 9, **dadurch gekennzeichnet, daß** die Kippachsen (20 - 23) an einander gegenüberliegenden Bereichen der Arbeitsbacken (9, 10) gelagert sind.

11. Abisolierwerkzeug nach Anspruch 8, 9 oder 10, **dadurch gekennzeichnet, daß** zwischen den pro Arbeitsbacken (9, 10) vorhandenen Elementen Abisoliermesser, Klemmbalken, Arbeitselementen oder Halteblöcken einerseits und den zugehörigen Kippachsen (20 - 23) andererseits eine Überkreuz-Zuordnung besteht.

12. Abisolierwerkzeug nach Anspruch 11, **dadurch gekennzeichnet, daß** die pro Arbeitsbacken (9, 10) vorhandenen Elemente Abisoliermesser, Klemmbalken, Arbeitselementen oder Halteblöcke durch Federkraft so vorgespannt sind, daß sie gegeneinander gedrückt werden.

13. Abisolierwerkzeug nach Anspruch 12, **dadurch gekennzeichnet, daß** am jeweiligen Arbeitsbacken (9, 10) ein Zentrierstift (42) befestigt ist, der zur Positionierung der Elemente Abisoliermesser, Klemmbalken, Arbeitselementen oder Halteblöcke in ihrer Ausgangsposition dient.

14. Abisolierwerkzeug nach einem der vorstehenden Ansprüche, **dadurch gekennzeichnet, daß** die Abisolierstation (11) um eine Achse justierbar ist, die senkrecht zur Zangenebene verläuft.

15. Abisolierwerkzeug nach einem der vorstehenden Ansprüche, **dadurch gekennzeichnet, daß** die Arbeitsbacken (9, 10) eine identische Form aufweisen.

16. Abisolierwerkzeug nach einem der vorstehenden Ansprüche, **dadurch gekennzeichnet, daß** die Abisolierstation (11) aus vier identisch aufgebauten Baugruppen besteht, mit denen Abisoliermesser (16 - 19) bzw. Klemmbalken oder Arbeitselemente verbindbar sind.

## Claims

1. Stripping tool with a first working jaw (9) and a second working jaw (10) of a stripping station (11), the second working jaw (10) being movable toward and away from the first working jaw (9), each working jaw (9, 10), to form the stripping station (11), bearing at least one stripping cutter (16, 18) and, parallel thereto, a working element (17, 19) in such a way that the working elements (17, 19) and the stripping cutters (16, 18) of the two working jaws (9, 10) respectively lie opposite one another and that, when each of the two working jaws (9, 10) is subjected to loading, the stripping cutter (16, 18) and working element (17, 19) move away from one another, **characterized in that** the first working jaw (9) of the stripping station (11) is fixedly attached to a support (51) and the second working jaw (10) is movably attached to the same support (51).

2. Stripping tool according to Claim 1, **characterized in that** the second working jaw (10) is guided on the support (50) in a parallel displaceable manner.

3. Stripping tool according to Claim 1 or 2, **characterized in that** the working element on each working jaw (9, 10) is formed as a stripping cutter (17, 19), so that each of the two working jaws (9, 10) of the stripping station (11) bears two stripping cutters (16, 17; 18, 19), which run parallel to one another and lie against one another and the cutting edges of which move apart from one another under loading.

4. Stripping tool according to Claim 1 or 2, **characterized in that** the working element on each working jaw (9, 10) is formed as a clamping bar, so that each of the two working jaws (9, 10) of the stripping station (11) bears a stripping cutter (16; 18) and a clamping bar lying parallel thereto, a cutting edge of the stripping cutter (16; 18) and a clamping face of the clamping bar respectively moving apart from one another under loading.

5. Stripping tool according to one of the preceding claims, **characterized in that** the movable working jaw (10) can be displaced by means of a drive element (2), which is mounted on the support (50).

6. Stripping tool according to Claim 5, **characterized in that** the movable working jaw (10) can be displaced by the drive element (2) by means of a toggle lever mechanism (#).

7. Stripping tool according to Claim 4 or 5, **characterized in that**, to form a stripper (1'), the support (50) is provided with a first handle (2) and the drive element is formed as a second handle (3).

8. Stripping tool according to one of the preceding claims, **characterized in that** the stripping cutters (16, 17; 18, 19) or clamping bars or working elements are pivotably mounted about a respective tilting axis (21, 20; 23, 22) running parallel to them.

9. Stripping tool according to Claim 8, **characterized in that** the stripping cutters or clamping bars or working elements are respectively held in a removable manner in a holding block (12 - 15), and **in that** the holding blocks (12 - 15) are pivotably mounted about the tilting axes (20 - 23).

10. Stripping tool according to Claim 8 or 9, **characterized in that** the tilting axes (20 - 23) are mounted on mutually opposite regions of the working jaws (9, 10).

11. Stripping tool according to Claim 8, 9 or 10, **characterized in that** there is a crossover assignment between the elements present on each working jaw (9, 10), the stripping cutters, clamping bars, working elements or holding blocks on the one hand and the associated tilting axes (20 - 23) on the other hand.

12. Stripping tool according to Claim 11, **characterized in that** the elements present on each working jaw (9, 10), the stripping cutters, clamping bars, working elements or holding blocks, are biased by spring force in such a way that they are pressed against one another.

13. Stripping tool according to Claim 12, **characterized in that** fastened on the respective working jaw (9, 10) is a centring pin (42), which serves for the positioning of the elements, the stripping cutters, clamping bars, working elements or holding blocks, in their starting position.

14. Stripping tool according to one of the preceding claims, **characterized in that** the stripping station (11) is adjustable about an axis which runs perpendicularly in relation to the plane of the stripper.

15. Stripping tool according to one of the preceding claims, **characterized in that** the working jaws (9, 10) have an identical form.

16. Stripping tool according to one of the preceding claims, **characterized in that** the stripping station (11) comprises four identically constructed subassemblies, to which stripping cutters (16 - 19) or clamping bars or working elements can be connected.

## Revendications

1. Outil de dénudage, comprenant une première mâchoire de travail (9) et une deuxième mâchoire de travail (10) d'un poste de dénudage (11), où la deuxième mâchoire de travail (10) est déplaçable sur la première mâchoire de travail (9), en rapprochement et en écartement de celle-ci, sachant que, pour former le poste de dénudage (11), chaque mâchoire de travail (9, 10) porte au moins une lame de dénudage (16, 18) et un élément de travail (17, 19) parallèle à celle-ci, de manière que les éléments de travail (17, 19) et les lames de dénudage (16, 18) des deux mâchoires de travail (9, 10) soient chacune placées l'une en face de l'autre et que, en cas de charge sur chacune des deux mâchoires de travail (9, 10), la lame de dénudage (16 ; 18) et l'élément de travail (17, 19) s'éloignent l'un de l'autre, **caractérisé en ce que** la première mâchoire de travail (9) du poste de dénudage (11) est montée rigidement sur un support (51) et la deuxième mâchoire de travail (10) est montée de façon mobile sur le même support (51).

2. Outil de dénudage selon la revendication 1, **caractérisé en ce que** la deuxième mâchoire de dénudage (10) est guidée de façon déplaçable parallèlement sur le support (50).

3. Outil de dénudage selon la revendication 1 ou 2, **caractérisé en ce que** l'élément de travail est réalisé sur chaque mâchoire de travail (9, 10) sous forme de lame de dénudage (17, 19), de manière que chacune des deux mâchoires de travail (9, 10) du poste de dénudage (11) porte deux lames de dénudage (16, 17 ; 18, 19), s'étendant parallèlement l'une à l'autre et en appui l'une sur l'autre, lames dont les tranchants de lame s'éloignent l'un de l'autre lors de l'application de la charge.

4. Outil de dénudage selon la revendication 1 ou 2, **caractérisé en ce que** l'élément de travail situé sur chaque mâchoire de travail (9, 10) est réalisé sous la forme de poutre de serrage, de manière que chacune des deux mâchoires de travail (9, 10) du poste de dénudage (11) porte une lame de dénudage (16 ; 18) et une poutre de serrage placée parallèlement à celle-ci, de sorte que, respectivement, un tranchant de la lame de dénudage (16 ; 18) et une face de serrage de la poutre de serrage s'éloignent l'un de l'autre lors de l'application de la charge.

5. Outil de dénudage selon l'une des revendications précédentes, **caractérisé en ce que** la mâchoire de travail (10) mobile est déplaçable au moyen d'un élément d'entraînement (2), monté sur le support (50).

6. Outil de dénudage selon la revendication 5, **caractérisé en ce que** la machoire de travail (10) mobile est déplaçable, par l'intermédiaire d'une transmission à levier à genouillère (#), sous l'action de l'élément d'entraînement (2).

7. Outil de dénudage selon la revendication 4 ou 5, **caractérisé en ce que**, pour former une pince de dénudage (1'), le support (50) est muni d'une première poignée (2) et l'élément d'entraînement est réalisé sous la forme de deuxième poignée (3).

8. Outil de dénudage selon l'une des revendications précédentes, **caractérisé en ce que** les lames de dénudage (16, 17 ; 18, 19), respectivement la poutre de serrage ou les éléments de travail, sont respectivement montés à rotation autour d'un axe de basculement (21, 20 ; 23, 22) parallèle à ceux-ci.

9. Outil de dénudage selon la revendication 8, **caractérisé en ce que** la lame de dénudage, respectivement la poutre de dénudage ou des éléments de travail sont chacun maintenus, de facon extractible, dans un bloc de maintien (12 à 15), et **en ce que** les blocs de maintien (12 à 15) sont montés à rotation autour des axes de basculement (20 à 23).

10. Outil de dénudage selon la revendication 8 ou 9, **caractérisé en ce que** les axes de basculement (20 à 23) sont montés sur des zones, opposées l'une à l'autre, des machoires de travail (9, 10).

11. Outil de dénudage selon la revendication 8, 9 ou 10, **caractérisé en ce que**, entre les éléments, existants pour chaque mâchoire de travail (9, 10), que sont les lames de dénudage, les poutres de travail, les éléments de travail ou les blocs de maintien, d'une part, et les axes de basculement (20 à 23) afférents, d'autre part, est constituée une association à croisement.

12. Outil de dénudage selon la revendication 11, **caractérisé en ce que** les éléments, existants pour chaque mâchoire de travail (9, 10), que sont les lames de dénudage, les mâchoires de serrage, les éléments de travail ou les blocs de maintien, sont précontraints au moyen d'une force élastique, de manière à être pressés les uns contre les autres.

13. Outil de dénudage selon la revendication 12, **caractérisé en ce que**, sur la mâchoire de travail (9, 10) respective, est fixée une goupille de centrage (42), servant au positionnement à leur position initiale des éléments que sont les lames de dénudage, les mâchoires de serrage, les éléments de travail ou les blocs de maintien.

14. Outil de dénudage selon l'une des revendications précédentes, **caractérisé en ce que** le poste de dénudage (11) est ajustable autour d'un axe s'étendant perpendiculairement par rapport au plan de pince.

15. Outil de dénudage selon l'une des revendications précédentes, **caractérisé en ce que** les mâchoires de travail (9, 10) présentent une forme identique.

16. Outil de dénudage selon l'une des revendications précédentes, **caractérisé en ce que** le poste de dénudage (11) est formé de quatre groupes de travail de construction identique, avec lesquels les lames de dénudage (16 à 19), respectivement les poutres de serrage ou les éléments de travail, sont susceptibles d'être relié(e)s.
